# EUROPEAN PATENT APPLICATION

(11) **EP 4 307 615 A1**
(43) Date of publication of application: **17.01.2024**
(21) Application number: 22784085.7
(22) Date of filing: 07.04.2022
(51) Int. Cl.: H04L 12/02, G06F 15/177

(54) **METHOD AND APPARATUS FOR DEPLOYING NETWORK DEVICE, AND DEVICE, SYSTEM AND STORAGE MEDIUM**

(30) Priority: 08.04.2021 CN 202110380535
(71) Applicant: Huawei Technologies Co., Ltd., Shenzhen, Guangdong 518129 (CN)
(72) Inventor: HUANG, Zhengquan, Shenzhen, Guangdong 518129 (CN)
(74) Representative: Pfenning, Meinig & Partner mbB
(86) International application number: PCT/CN2022/085487
(87) International publication number: WO 2022/214019

(57) **Abstract**

This application provides a method and an apparatus for deploying a network device, a device, a system, and a storage medium. The method includes: A terminal device obtains a server identifier and an enterprise identifier, where the server identifier indicates a server to which the network device needs to connect, and the enterprise identifier indicates an enterprise to which the network device belongs; obtains an identifier of the network device; associates the identifier of the network device with the enterprise identifier to generate association information; and sends the association information to the server indicated by the server identifier. With implementation of embodiments, deployment of a network device can be implemented without a need for enterprise's network management personnel to arrive at a site of installation of the network device. This is convenient and quick to implement.

## Description

This application claims priority to Chinese Patent Application No. 2021103805356, filed with the China National Intellectual Property Administration on April 8, 2021 and entitled "METHOD AND APPARATUS FOR DEPLOYING NETWORK DEVICE, DEVICE, SYSTEM, AND STORAGE MEDIUM", which is incorporated herein by reference in its entirety.

### TECHNICAL FIELD

This application relates to the field of communication technologies, and in particular, to a method and an apparatus for deploying a network device, a device, a system, and a storage medium.

### BACKGROUND

With development of cloud computing technologies, the idea of "cloud" has been accepted by a wide range of enterprises. Many enterprises connect internal network devices to the cloud and manage the network devices using a cloud mode. To be specific, enterprise's network management personnel remotely manages, over the Internet, network devices that are connected to the cloud, including: adding, deleting, managing, and maintaining a network device, and so on.

However, connection of network devices to the cloud requires enterprise's network management personnel to arrive at a site of installation of the network devices. This is inconvenient for the enterprise's network management personnel.

### SUMMARY

This application discloses a method and an apparatus for deploying a network device, a device, a system, and a storage medium. In the method, deployment of the network device can be implemented without a need for enterprise's network management personnel to arrive at a site of installation of the network device. This is convenient and quick to implement.

According to a first aspect, this application provides a method for deploying a network device. The method includes: A terminal device obtains a server identifier and an enterprise identifier, where the server identifier indicates a server that manages the network device, the enterprise identifier indicates an enterprise to which the network device belongs, and the server does not belong to the enterprise; obtains an identifier of the network device; associates the identifier of the network device with the enterprise identifier to generate association information; and sends the association information to the server indicated by the server identifier.

It can be learned that the terminal device obtains the server identifier and the enterprise identifier, then obtains the identifier of the network device, generates the association information based on the identifier of the network device and the enterprise identifier, and sends the association information to the server indicated by the server identifier. The terminal device is a device used by any temporary operator at the site at which the network device is installed. In this application, onsite personnel directly performs operations without a need for enterprise's network management personnel to arrive at the site. Therefore, this is quick in deployment and efficient.

Based on the first aspect, in a possible implementation, the obtaining a server identifier and an enterprise identifier includes: obtaining encrypted information; and decrypting the encrypted information to obtain the server identifier and the enterprise identifier.

It may be understood that, in order to ensure information security, the server identifier and the enterprise identifier obtained by the terminal device may be in a form of encrypted information. After obtaining the encrypted information, the terminal device decrypts the encrypted information, to obtain the server identifier and the enterprise identifier.

Based on the first aspect, in a possible implementation, a form of the encrypted information includes a quick-response code; and correspondingly, the decrypting the encrypted information to obtain the server identifier and the enterprise identifier includes: scanning and parsing the quick-response code to obtain the server identifier and the enterprise identifier.

It can be learned that, in order to facilitate the temporary operator, the encrypted information may be in a form of a quick-response code. The temporary operator may directly scan, using the terminal device, the quick-response code to obtain the server identifier and the enterprise identifier, with no need to manually enter the server identifier and the enterprise identifier. This avoids input errors caused by manual input and is easy to operate, and information has high accuracy.

Based on the first aspect, in a possible implementation, the scanning and parsing the quick-response code to obtain the server identifier and the enterprise identifier includes: scanning and parsing the quick-response code to obtain a first uniform resource locator URL link; and obtaining the server identifier and the enterprise identifier based on the first URL link.

It can be learned that, in order to further ensure information security and facilitate the temporary operator, the manner of obtaining the server identifier and the enterprise identifier may alternatively be: After obtaining the quick-response code, the terminal device scans the quick-response code to obtain the first URL link, and then obtains the server identifier and the enterprise identifier based on the first URL link. In this implementation, information security is ensured and the operation is easy.

Based on the first aspect, in a possible implementation, the scanning and parsing the quick-response code to obtain the server identifier and the enterprise identifier includes: scanning and parsing the quick-response code to obtain a second uniform resource locator URL link, where the second URL link includes the server identifier and the enterprise identifier.

It may be understood that, the manner of obtaining the server identifier and the enterprise identifier may alternatively be: After scanning the quick-response code, the terminal device obtains the second URL link, where the second URL link includes the server identifier and the enterprise identifier.

Based on the first aspect, in a possible implementation, a form of the encrypted information includes a third uniform resource locator URL link, where the third URL link indicates to obtain the server identifier and the enterprise identifier; and correspondingly, the decrypting the encrypted information to obtain the server identifier and the enterprise identifier includes: obtaining the server identifier and the enterprise identifier based on the third URL link.

It can be learned that the encrypted information may alternatively be in a form of the third URL link, and the terminal device obtains the server identifier and the enterprise identifier based on the third URL link.

Based on the first aspect, in a possible implementation, a form of the encrypted information includes a fourth uniform resource locator URL link, where the fourth URL link includes the server identifier and the enterprise identifier.

It may be understood that the encrypted information may alternatively be in a form of the fourth URL link, where the fourth URL link includes the server identifier and the enterprise identifier.

Based on the first aspect, in a possible implementation, the encrypted information further includes account permission information; and the account permission information indicates permission possessed by the terminal device, including permission to associate the identifier of the network device with the enterprise identifier to generate the association information, and/or permission to send the association information to the server indicated by the server identifier.

It can be learned that the encrypted information may further include the account permission information, where the account permission information indicates the permission possessed by the terminal device, including the permission to associate the identifier of the network device with the enterprise identifier and the permission to send the association information to the server. The account permission information can further ensure operation permission of the temporary operator and prevent another person from performing misoperations or incorrect operations.

Based on the first aspect, in a possible implementation, the obtaining a server identifier and an enterprise identifier includes: obtaining speech information; and recognizing the speech information to obtain the server identifier and the enterprise identifier.

It may be understood that, the server identifier and the enterprise identifier may be obtained alternatively based on the speech information. After receiving the speech information, the terminal device obtains the server identifier and the enterprise identifier by recognizing the speech information. In this manner, the terminal device may automatically obtain the server identifier and the enterprise identifier based on speech recognition, and there is no need to manually enter the server identifier and the enterprise identifier. This avoids a case in which a manual input error may cause a failure in associating the identifier of the network device with the enterprise identifier.

According to a second aspect, this application provides an apparatus for deploying a network device. The apparatus includes: an obtaining unit, configured to obtain a server identifier and an enterprise identifier, where the server identifier indicates a server that manages the network device, and the enterprise identifier indicates an enterprise to which the network device belongs; and further configured to obtain an identifier of the network device; an association unit, configured to associate the identifier of the network device with the enterprise identifier to generate association information; and a communication unit, configured to send the association information to the server indicated by the server identifier.

Based on the second aspect, in a possible implementation, the obtaining unit is configured to: obtain encrypted information; and decrypt the encrypted information to obtain the server identifier and the enterprise identifier.

Based on the second aspect, in a possible implementation, a form of the encrypted information includes a quick-response code. The obtaining unit is configured to scan and parse the quick-response code to obtain the server identifier and the enterprise identifier.

Based on the second aspect, in a possible implementation, the obtaining unit is configured to: scan and parse the quick-response code to obtain a first uniform resource locator URL link; and obtain the server identifier and the enterprise identifier based on the first URL link.

Based on the second aspect, in a possible implementation, the obtaining unit is configured to: scan and parse the quick-response code to obtain a second uniform resource locator URL link, where the second URL link includes the server identifier and the enterprise identifier.

Based on the second aspect, in a possible implementation, a form of the encrypted information includes a third uniform resource locator URL link, and the third URL link indicates to obtain the server identifier and the enterprise identifier; and the obtaining unit is configured to obtain the server identifier and the enterprise identifier based on the third URL link.

Based on the second aspect, in a possible implementation, a form of the encrypted information includes a fourth uniform resource locator URL link, and the fourth URL link includes the server identifier and the enterprise identifier.

Based on the second aspect, in a possible implementation, the encrypted information further includes account permission information; and the account permission information indicates permission possessed by the terminal device, including permission to associate the identifier of the network device with the enterprise identifier to generate the association information, and/or permission to send the association information to the server indicated by the server identifier.

Based on the second aspect, in a possible implementation, the obtaining unit is configured to: obtain speech information; and recognize the speech information to obtain the server identifier and the enterprise identifier.

The functional units in the apparatus according to the second aspect are configured to implement the method according to any one of the first aspect or the implementations of the first aspect.

According to a third aspect, this application provides a terminal device, including a memory and a processor. The memory is configured to store instructions, and the processor is configured to invoke the instructions stored in the memory to perform the method according to any one of the first aspect or the implementations of the first aspect.

According to a fourth aspect, this application provides a computer storage medium, including program instructions. When the program instructions are run on a computer, the computer is enabled to perform the method according to any one of the first aspect or the implementations of the first aspect.

According to a fifth aspect, this application provides a computer program product. The computer program product includes program instructions. When the computer program product is executed by a terminal device, the terminal device performs the method according to the first aspect. The computer program product may be a software installation package. When the method provided in any possible design of the first aspect needs to be used, the computer program product may be downloaded and executed on the terminal device, to implement the method according to any one of the first aspect or the possible implementations of the first aspect.

According to a sixth aspect, this application provides a system, including a terminal device and a server. The terminal device is configured to perform the method according to any one of the first aspect or the implementations of the first aspect.

It can be learned that, during deployment of a network device, in order to overcome the disadvantage that enterprise's network management personnel needs to arrive at the site of installation of the network device for deployment of the network device, this application provides a method for deploying the network device. In the method, the terminal device obtains a server identifier and an enterprise identifier, where the terminal device may be a device used by any temporary operator at the site at which the network device is installed, and the server identifier and the enterprise identifier may be in a form of encrypted information. For ease of operation, for example, the encrypted information may be in a form of a quick-response code or a URL link. Then an identifier of the network device is obtained. Association information is generated based on the identifier of the network device and the enterprise identifier, and the association information is sent to a server indicated by the server identifier. After receiving the association information, the server stores the association information, to be specific, stores the association between the identifier of the network device and the enterprise identifier. The server receives a deployment application of the network device, where the deployment application carries the identifier of the network device; and the server sends configuration information to the network device, so that the network device completes deployment configuration based on the configuration information. With implementation of this application, the deployment of the network device can be completed without a need for the enterprise's network management personnel to arrive at the site at which the network device is installed. The method provides quick deployment and easy to implement.

### BRIEF DESCRIPTION OF DRAWINGS

To describe technical solutions in embodiments of this application more clearly, the following briefly describes the accompanying drawings used for describing embodiments. It is clear that the accompanying drawings in the following descriptions show some embodiments of this application, and a person of ordinary skill in the art may still derive other accompanying drawings from these accompanying drawings without creative efforts.
FIG. 1 is a schematic diagram of an architecture of a system according to this application;
FIG. 2 is a schematic flowchart of a method for deploying a network device according to this application;
FIG. 3 is a schematic diagram of an apparatus for deploying a network device according to this application;
FIG. 4 is a schematic diagram of a structure of a terminal device according to this application;
FIG. 5 is a schematic diagram of a structure of a server according to this application; and
FIG. 6 is a schematic diagram of a structure of a system according to this application.

### DESCRIPTION OF EMBODIMENTS

The following describes in detail the solutions in embodiments provided in this application with reference to the accompanying drawings in this application.

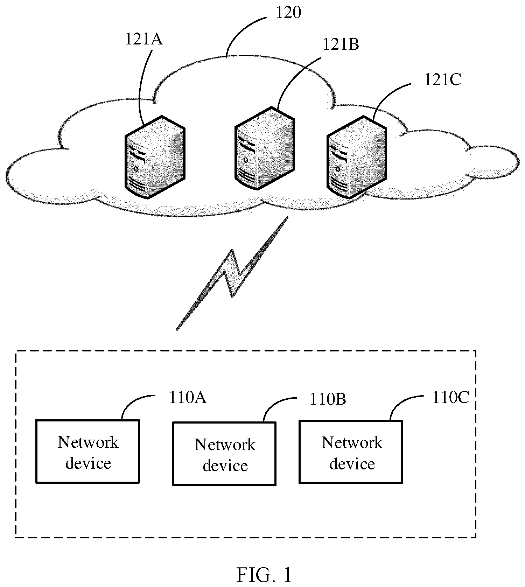

FIG. 1 is a schematic diagram of an architecture of a system according to this application. The system includes at least one network device (for example, a network device 110A, a network device 110B, and a network device 110C) and a cloud 120. The cloud 120 includes at least one server, for example, a server 121A, a server 121B, and a server 121C.

The cloud 120 is a computing device cluster that is provided by a third-party provider for users or enterprises and that is used to provide computing, storage, and communication resources. In this application, the cloud 120 is used to provide a free or low-cost resource service for one or more enterprises. The cloud 120 may be provided by any provider. For example, the cloud 120 may be provided by a provider A, a provider B, or a provider C.

The network device is a router, a switch, a firewall, or the like. The network device 110A, the network device 110B, and the network device 110C may be connected to the cloud 120 through a network.

The server 121A, the server 121B, and the server 121C may be physical servers, or may be virtual machines. This is not specifically limited in this application.

For an enterprise, there are a plurality of network devices in the enterprise, and the plurality of network devices may be connected to the cloud 120 provided by one provider, or may be connected to clouds 120 provided by a plurality of providers. For example, all network devices in an enterprise A may be connected to the cloud provided by the provider A. Alternatively, some network devices in the enterprise A may be connected to the cloud provided by the provider A, and some network devices may be connected to the cloud provided by the provider B. In other words, all of the network devices in the enterprise may be connected to the cloud 120 provided by the provider or the clouds 120 provided by the plurality of providers.

The cloud 120 provided by the provider may be connected to network devices of one or more enterprises. For example, the cloud provided by the provider A may be connected to only some or all of the network devices of the enterprise A. Alternatively, the cloud provided by the provider A may be connected to some or all of the network devices of the enterprise A and some or all of network devices of an enterprise B.

A network management system is installed on the server, and the network management system is used to allocate resources and manage the resources for the at least one enterprise that is connected to the server, and for each network device in each enterprise. A network administrator of each enterprise may log in to the network management system by using an account and a password, to view each network device of the enterprise and a running status of each network device, and operate and maintain each network device.

In the foregoing system, the enterprise's network management personnel may log in to the network management system to view a network device of the enterprise and a running status of the network device, and operate and maintain the network device. A prerequisite is that the network device has been successfully connected to the server, that the server is successfully associated with or bound to the enterprise to which the network device belongs, and that a related configuration is completed. In other words, deployment of the network device is completed. The following describes how to implement deployment of a network device.
(1) Enterprise's network management personnel arrives at a place at which the network device is installed, with a terminal device, and obtains an identifier of the network device by using the terminal device, where the identifier of the network device is a basis for distinguishing between network devices. The identifier of the network device may be an electronic serial number (electronic serial number, ESN), a media access control (Media Access Control, MAC) address, or the like of the network device. The terminal device may be any one of a mobile phone, a computer, an iPad, a wearable electronic device, and the like.
(2) The terminal device associates the identifier of the network device with an enterprise identifier of the enterprise to which the network device belongs, to obtain association information, and sends the association information to a target server. The target server is a server that manages the network device, and the target server does not belong to an enterprise to which the network device belongs. For example, the target server may be a server provided by provider A. The enterprise identifier is a basis for distinguishing between enterprises, and enterprise identifiers of different enterprises are different. The enterprise identifier may be a name or an address of an enterprise, or may be a name, a number, or the like that is manually set and that identifies an enterprise.
   Optionally, the terminal device may further send the association information and information about the target server (a name, an identifier, an address, or the like of the target server) to the network device, so that the network device queries an enterprise to which the network device belongs and a server to which the network device belongs.
(3) The target server receives the association information sent by the terminal device, and stores the association relationship, to be specific, stores the association relationship between the identifier of the network device and the enterprise identifier. If information about an enterprise does not exist on the server, that is, it is the first time for the enterprise to connect the network device to the server, the server creates the enterprise identifier of the enterprise, and associates the identifier of the network device with the enterprise identifier. If information about an enterprise exists on the server, that is, it is not the first time for the enterprise to connect the network device to the server, the identifier of the network device is directly associated with the enterprise identifier.
   Optionally, the target server may send the association information to a registration service center, where the registration service center is used to store and manage registration information of each network device and registration information of each enterprise on the server.
(4) The network device is powered on, obtains an address of the server to which the network device belongs, that is, the address of the target server, and initiates a deployment application to the target server, where the deployment application carries the identifier of the network device. A method for the network device to obtain a server to which the network device belongs may be: obtaining the name, the identifier, the address of the target server from the registration service center (to be specific, after the network device knows which server the network device belongs to, the network device may determine the address of the target server based on information that has been stored in the network device), or obtaining the address of the target server based on the association information sent by the terminal device and the information about the target server sent by the terminal device.
(5) The target server receives the deployment application sent by the network device, and delivers configuration information, for example, a packet forwarding priority, an access control list (access control list, ACL) policy, a quality of service (quality of service, QoS) policy, or the like, to the network device based on the identifier of the network device and the identifier of the enterprise to which the network device belongs. Correspondingly, after receiving the configuration information sent by the target server, the network device configures itself, to process packets based on the configuration information in subsequent application. In this case, the deployment of the network device is completed.

In the network device deployment method, operations such as obtaining the identifier of the network device, uploading the identifier of the network device to the target server, and allocating the target server to the network device, require the enterprise's network management personnel to go to the site at which the network device is installed to complete the operations. However, in a case in which the enterprise's network management personnel is far away from, or even is in a different place from the site at which the network device is installed, it is inconvenient for the enterprise's network management personnel to arrive at the installation site, and the deployment of the network device cannot be quickly and efficiently completed.

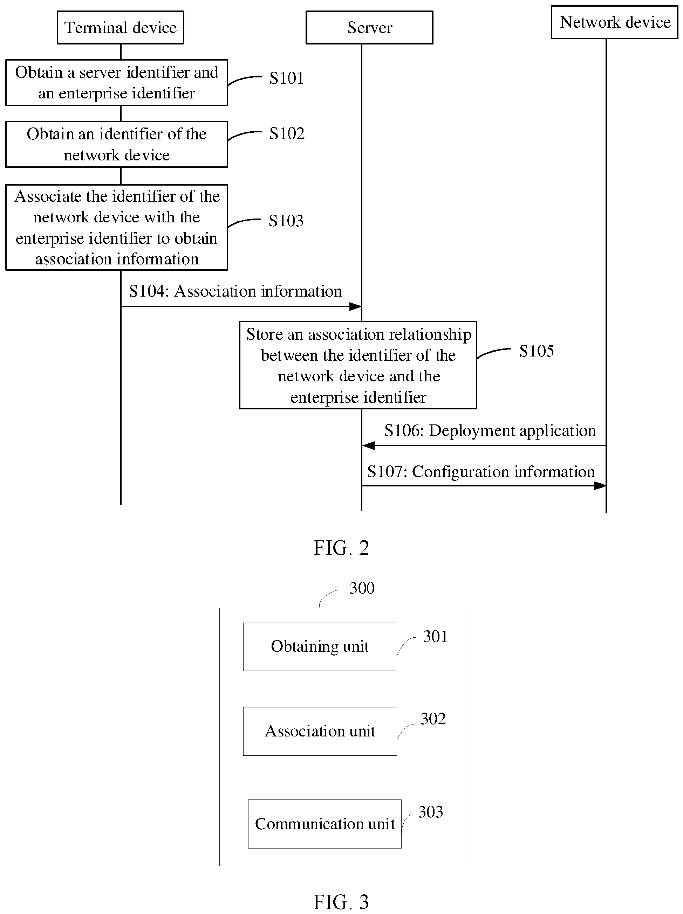

This application provides a method for deploying a network device. FIG. 2 is a schematic flowchart of the method for deploying a network device according to this application. The method includes but is not limited to descriptions of the following content.

S101: A terminal device obtains a server identifier and an enterprise identifier.

The terminal device is a device used by a temporary operator at a place where the network device is located. The temporary operator may be any person at the place where the network device is located. The terminal device may be any one of electronic devices with a communication function, such as a mobile phone, a computer, a tablet, an iPad, a notebook computer, or a watch.

The server identifier indicates a server that manages the network device. The server identifier may be a manually configured name of the server. For example, if the server that manages the network device is a server provided by provider A, the server identifier may be a provider A server. If the server that manages the network device is a server provided by provider B, the server identifier may be the provider B server. The server identifier may alternatively be a login address of the server. For example, if the server that manages the network device is the server provided by the provider A, the server identifier may be a login address of the server provided by the provider A. If the server that manages the network device is the server provided by the provider B, the server identifier may be a login address of the server provided by the provider B. The server identifier is not specifically limited in this application, provided that the server identifier can represent the server that manages the network device.

The enterprise identifier indicates an enterprise to which the network device belongs. For example, if the network device belongs to an enterprise A, the enterprise identifier may be A, where A may be an enterprise name, an enterprise address, or the like. In a case in which there are a plurality of chain enterprises, a plurality of branch enterprises, a plurality of subsidiary enterprises, a plurality of associate enterprises, or the like in one enterprise, the enterprise identifier may include an address or a name of a specific branch enterprise, a specific subsidiary enterprise, or a specific associate enterprise, that is, the specific subsidiary enterprise, the specific branch enterprise, or the specific associate enterprise to which the network device belongs may be determined based on the enterprise identifier. For example, if there are three branch enterprises in the enterprise A, the three branch enterprises are respectively located in Beijing, Nanjing, and Shenzhen, and the network device belongs to the enterprise in Nanjing, the enterprise identifier may be a name of the enterprise A-Nanjing; for another example, if there are three branch enterprises in the enterprise A, the three branch enterprises are respectively a store 1 of the enterprise A, a store 2 of the enterprise A, and a store 3 of the enterprise A, and the network device belongs to the store 1 of the enterprise A, the enterprise identifier may be the store 1 of the enterprise A; and so on. The enterprise identifier is not specifically limited in this application, provided that the enterprise identifier may represent the enterprise to which the network device belongs.

A manner in which the terminal device obtains the server identifier and the enterprise identifier may be: obtaining the server identifier and the enterprise identifier from the server, or may be: obtaining the server identifier and the enterprise identifier from another terminal device, or may be: obtaining the server identifier and the enterprise identifier from another source. The manner in which the terminal device obtains the server identifier and the enterprise identifier is not specifically limited in this application.

After obtaining the server identifier and the enterprise identifier, the terminal device knows which server manages the network device and which enterprise the network device belongs to.

Optionally, in order to ensure information security, the server identifier and the enterprise identifier may be in a form of encrypted information. The terminal device obtains the encrypted information, and decrypts the encrypted information to obtain the server identifier and the enterprise identifier. In order to facilitate an operation performed by the temporary operator, the form of the encrypted information may be, for example, a quick-response code. After receiving the quick-response code, the terminal device scans and parses the quick-response code to obtain the server identifier and the enterprise identifier. For another example, the form of the encrypted information may alternatively be a third URL link, where the third URL link indicates to obtain the server identifier and the enterprise identifier. The temporary operator may remotely obtain the server identifier and the enterprise identifier by clicking the third URL link for access, for example, the third URL link may be http://xxxxxx. The temporary operator may invoke another local application program by clicking the third URL link, and obtain the server identifier and the enterprise identifier from the another application program. Alternatively, the terminal device automatically jumps to a page directly based on the third URL link without performing an operation such as a manual click operation, to obtain the server identifier and the enterprise identifier. For another example, the form of the encrypted information may alternatively be a fourth URL link, where the fourth URL link includes the server identifier and the enterprise identifier. For example, the fourth URL link may be 123456ab:/provider A server/name of the enterprise A/, where "provider A server" is the server identifier, and "name of the enterprise A" is the enterprise identifier. Examples of the third URL link and the fourth URL link are merely for ease of understanding, and forms of the third URL link and the fourth URL link are not specifically limited in this application.

Optionally, that the terminal device scans and parses the quick-response code to obtain the server identifier and the enterprise identifier may alternatively include: The terminal device scans and parses the quick-response code to obtain a first uniform resource locator URL link, and then obtains the server identifier and the enterprise identifier based on the first URL link. One implementation of obtaining the server identifier and the enterprise identifier based on the first URL link is that the temporary operator remotely obtains the server identifier and the enterprise identifier by clicking the first URL link for access. Another implementation is that after the terminal device scans the quick-response code to obtain the first URL link, there is no need for the temporary operator to perform the click operation, and the terminal device automatically jumps to the page directly based on the first URL link, and remotely obtains the server identifier and the enterprise identifier. Another implementation is that the temporary operator invokes the another local application program by clicking the first URL link, and obtains the server identifier and the enterprise identifier from the another application program. Another implementation is that after the terminal device scans the quick-response code to obtain the first URL link, there is no need for the temporary operator to perform the click operation, and the terminal device automatically invokes the another local application program directly based on the first URL link, and obtains the server identifier and the enterprise identifier from the another application program. Optionally, that the terminal device scans and parses the quick-response code to obtain the server identifier and the enterprise identifier may alternatively include: The terminal device scans and parses the quick-response code to obtain a second URL link, where the second URL link includes the server identifier and the enterprise identifier.

In this application, the server identifier and the enterprise identifier are in a form of a quick-response code or a form of a URL link, to ensure information security, and ensure that the information is not tampered with or incorrectly modified, and further, to facilitate the operation performed by the temporary operator. In this application, there is no need for the temporary operator to manually enter the server identifier and the enterprise identifier, so that a disadvantage of an input error caused by the manual input is avoided. There are advantages of convenient operation and improved efficiency.

Optionally, the encrypted information may further include account permission information, where the account permission information indicates permission possessed by the terminal device, for example, permission to associate an identifier of the network device with the enterprise identifier to generate association information, and permission to send the generated association information to the server indicated by the server identifier. For example, the account permission information may include a temporary account, and the temporary account is used to log in to a specified application program on the terminal device. In this example, after logging in to the specified application program by using the temporary account, the temporary operator performs subsequent steps S102 and S103 by using the specified application program. For details, refer to descriptions of steps S102 and S103. Steps S102 and S103 can be completed only by using the specified application program, and other methods are not feasible, to prevent another person from performing an incorrect operation or a misoperation, and to ensure information security. In order to further ensure information security, the account permission information may further include some operation permission related to the temporary account, for example, a validity period or a validity time limit of the temporary account, a quantity of times the temporary account is allowed to log in to a terminal, or a quantity of accounts that are allowed to log in to the terminal.

Optionally, in order to facilitate the operation performed by the temporary operator, the server identifier, the enterprise identifier, and the account permission information may be in a form of a quick-response code. To be specific, after receiving the quick-response code, the terminal device obtains the server identifier and the enterprise identifier through scanning and parsing, automatically logs in to the specified application program by using the temporary account, and performs the following steps S102 and S103 by using the specified application program on the terminal device.

Optionally, if the network device is a gateway device, the terminal device may further obtain a point-to-point protocol over Ethernet (Point-to-Point Protocol over Ethernet, PPPoE) account and a PPPoE password, where the PPPoE account and the PPPoE password are used for configuration of the network device. The PPPoE account and the PPPoE password may alternatively be obtained in a form of a quick-response code together with information such as the server identifier and the enterprise identifier.

Optionally, the quick-response code may be an encrypted quick-response code. The terminal device scans and decrypts the received encrypted quick-response code to obtain the server identifier and the enterprise identifier, and at the same time, automatically logs in to the specified application program by using the temporary account.

Information content carried in the quick-response code may be specifically determined based on a specific situation. For ease of understanding, the following two examples are used for description.
Example 1: Server identifier = Provider A server\Enterprise identifier = Name of the enterprise A-Nanjing\Temporary account = abc\Validity period of the temporary account = 10:00 to 12:00 on March 11\Quantity of times the temporary account is allowed to log in = 1
Example 2: Server identifier = Provider A server\Enterprise identifier = Name of the enterprise A-Nanjing\Temporary account = abcdef\PPPoE account = def\PPPoE password = 123

In Example 1, the quick-response code carries information such as the server identifier, the enterprise identifier, the temporary account, the validity period of the temporary account, and the quantity of times the temporary account is allowed to log in. In Example 2, the quick-response code carries information such as the server identifier, the enterprise identifier, the temporary account, the PPPoE account, and the PPPoE password. The foregoing two examples are merely examples of the content carried in the quick-response code and a content format, and are not intended to limit this application. The encrypted information in a form of a quick-response code is merely an example of this application. The encrypted information may alternatively exist in another form, for example, in a form of a barcode. This is not specifically limited in this application.

Optionally, that the terminal device obtains the server identifier and the enterprise identifier may alternatively include: The terminal device obtains speech information, and then recognizes the speech information to obtain the server identifier and the enterprise identifier. The speech information may be obtained from the server, or may be obtained from another terminal device. The terminal device automatically obtains the server identifier and the enterprise identifier by recognizing the speech information, without manual input. Optionally, the speech information may further include the account permission information and the like.

S102: The terminal device obtains the identifier of the network device.

The identifier of the network device may be, for example, an electronic serial number or a MAC address of the network device, or may be a manually configured name of the network device.

A manner in which the terminal device obtains the identifier of the network device may be: scanning a barcode or a quick-response code of the network device, or may be manually entered.

Optionally, after logging in to the specified application program, the terminal device may scan the barcode or the quick-response code of the network device by using the application program, to obtain the identifier of the network device.

S103: The terminal device associates the identifier of the network device with the enterprise identifier to obtain the association information.

The terminal device associates the identifier of the network device with the enterprise identifier of the enterprise to which the network device belongs, to obtain the association information. Optionally, the identifier of the network device may be associated with the enterprise identifier of the enterprise to which the network device belongs by using the specified application program.

For example, Table 1 is an example table of the association information provided in this application. "Electronic serial number" represents an identifier of a router, "Name of the enterprise A-Nanjing" represents an identifier of the enterprise A, and the association information represents that an enterprise to which the router belongs is the enterprise A.

**Table 1**

| Identifier of a network device | Enterprise identifier |
|---|---|
| Electronic serial number | Name of the enterprise A-Nanjing |

S104: The terminal device sends the association information to the server indicated by the server identifier. Correspondingly, the server receives the association information sent by the terminal device.

The terminal device sends the association information to the server indicated by the server identifier. Correspondingly, the server receives the association information sent by the terminal device, and the server knows the identifier of the network device and knows which enterprise the network device belongs to.

Optionally, if the network device is the gateway device, the terminal device may further send the PPPoE account and the PPPoE password to the network device.

S105: The server stores the association relationship between the identifier of the network device and the enterprise identifier.

S106: The server receives a deployment application sent by the network device.

After being powered on, the network device sends the deployment application to the server, where the deployment application carries the identifier of the network device. Correspondingly, the server receives the deployment application sent by the network device. A method for the network device to learn which server the network device needs to send the deployment application to is described in the foregoing content, and is not described herein again.

Optionally, if the network device is the gateway device, after being powered on, the network device receives and configures the PPPoE account and the PPPoE password of the network device, and then sends the deployment application to the server.

S107: The server delivers configuration information to the network device.

The server delivers the configuration information to the network device, so that the network device completes deployment configuration.

It can be learned that the terminal device obtains the server identifier and the enterprise identifier, obtains the identifier of the network device, and then associates the identifier of the network device with the enterprise identifier to generate the association information, and sends the association information to the server indicated by the server identifier. The server receives the association information, and stores the association relationship between the identifier of the network device and the enterprise identifier. When the deployment application of the network device is received, where the deployment application carries the identifier of the network device, the server delivers the deployment configuration information to the network device, to complete the deployment of the network device. In this application, the server identifier and the enterprise identifier may be in a form of a quick-response code, a URL link, or speech information, which ensures information security and facilitates the operation performed by the temporary operator. The method in this application provides quick deployment and easy to operate.

FIG. 3 is a schematic diagram of a structure of an apparatus 300 for deploying a network device according to an embodiment of this application. The apparatus 300 includes: an obtaining unit 301, configured to obtain a server identifier and an enterprise identifier, and further configured to obtain an identifier of the network device; and may be specifically configured to perform step S101 and step S102 in FIG. 2; an association unit 302, configured to associate the identifier of the network device with the enterprise identifier to generate association information, and may be specifically configured to perform step S103 in FIG. 2; and a communication unit 303, configured to send the association information to a server indicated by the server identifier. Specifically, the communication unit 303 may be configured to perform step S104 in FIG. 2.

The apparatus 300 for deploying a network device corresponds to a terminal device in the foregoing method embodiment. Units in the apparatus 300 for deploying a network device are configured to implement the steps and the method implemented by the terminal device in the method embodiment. For specific details, refer to the descriptions of the foregoing method. For brevity of this specification, details are not described herein again.

The division into the foregoing functional units in the apparatus 300 for deploying a network device is merely used as an example for description. In actual application, the foregoing functions may be allocated to different functional units for implementation as required, to be specific, an internal structure of the apparatus 300 for deploying a network device may be divided into different functional units, to implement all or some functions described in the method embodiment.

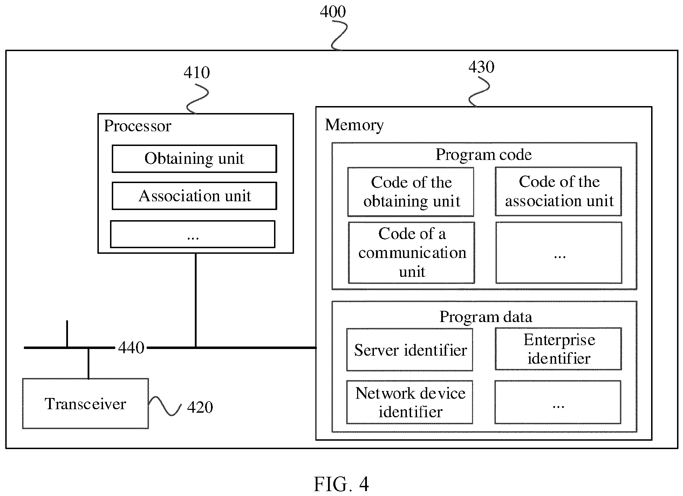

FIG. 4 is a schematic diagram of a terminal device 400 according to an embodiment of this application. The terminal device 400 includes at least a processor 410, a transceiver 420, and a memory 430. The processor 410, the transceiver 420, and the memory 430 are coupled through a bus 440. Details are as follows:
The processor 410 is configured to run an obtaining unit 301, an association unit 302, and a communication unit 303 in FIG. 3 by invoking program code in the memory 430. In actual application, the processor 410 may include one or more general-purpose processors. The general-purpose processor may be any type of device that can process an electronic instruction, including a central processing unit (Central Processing Unit, CPU), a microprocessor, a microcontroller, a main processor, a controller, an ASIC (Application Specific Integrated Circuit, application specific integrated circuit), and the like. The processor 410 reads the program code stored in the memory 430, and cooperates with the transceiver 420 to perform some or all of the steps of the method performed by an interface data playback apparatus 40 in the foregoing embodiment of this application.

The transceiver 420 may be a wired interface (for example, an Ethernet interface), and is configured to communicate with another computing node or apparatus. When the transceiver 420 is the wired interface, the transceiver 420 may use a protocol suite built on TCP/IP, such as an RAAS protocol, a remote function call (Remote Function Call, RFC) protocol, a simple object access protocol (Simple Object Access Protocol, SOAP), a simple network management protocol (Simple Network Management Protocol, SNMP), a common object request broker architecture (Common Object Request Broker Architecture, CORBA) protocol, and a distributed protocol. Alternatively, the transceiver 420 may be a specific apparatus, and is configured to receive or send data information or the like.

The memory 430 may store the program code and program data. The program code includes code of the obtaining unit 301, code of the association unit 302, and code of the communication unit 303. The program data includes: a server identifier, an enterprise identifier, an identifier of a network device, association information, and the like. In actual application, the memory 430 may include a volatile memory (Volatile Memory), for example, a random access memory (Random Access Memory, RAM). The memory may alternatively include a non-volatile memory (Non-Volatile Memory), for example, a read-only memory (Read-Only Memory, ROM), a flash memory (Flash Memory), a hard disk drive (Hard Disk Drive, HDD), or a solid-state drive (Solid-State Drive, SSD). Alternatively, the memory may include a combination of the foregoing types of memories.

Optionally, the terminal device 400 may further include a user interaction interface, and the user interaction interface is configured to receive an operation of a user, for example, a click operation performed by the user on a first URL link or a second URL link.

In the apparatus 300 for deploying the network device, the obtaining unit 301 and the association unit 302 may be located in the processor 410 in the terminal device 400, and the communication unit 303 may be located in a transceiver in the terminal device 400.

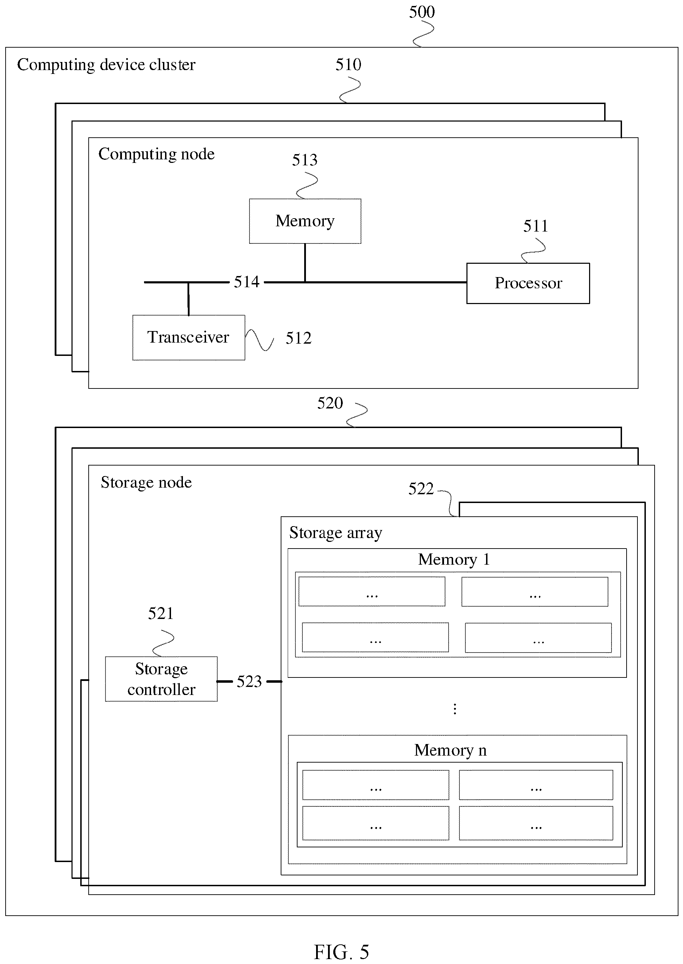

FIG. 5 is a schematic diagram of a structure of a server 500 according to an embodiment of this application. The server 500 may be implemented in a cloud, and includes at least the following: at least one computing node 510 and at least one storage node 520. Details are as follows:
The computing node 510 includes one or more processors 511, a transceiver 512, and a memory 513. The processor 511, the transceiver 512, and the memory 513 may be connected through a bus 514.

The processor 511 includes one or more general-purpose processors, and is configured to perform the method in FIG. 2 by invoking program code in the memory 513. The general-purpose processor may be any type of device that can process an electronic instruction, including a central processing unit (Central Processing Unit, CPU), a microprocessor, a microcontroller, a main processor, a controller, an ASIC (Application Specific Integrated Circuit, application specific integrated circuit), and the like. The processor 511 may be a dedicated processor only for the computing node 510 or may be shared with another computing node 510. The processor 511 reads the program code stored in the memory 513, and cooperates with the transceiver 512 to perform some or all of the steps in the method for deploying a network device in the foregoing embodiments of this application.

The transceiver 512 may be a wired interface (for example, an Ethernet interface), and is configured to communicate with another computing node or user. When the transceiver 512 is the wired interface, the transceiver 512 may use a protocol suite built on TCP/IP, such as an RAAS protocol, a remote function call (Remote Function Call, RFC) protocol, a simple object access protocol (Simple Object Access Protocol, SOAP), a simple network management protocol (Simple Network Management Protocol, SNMP), a common object request broker architecture (Common Object Request Broker Architecture, CORBA) protocol, and a distributed protocol.

The memory 513 may include a volatile memory (Volatile Memory), for example, a random access memory (Random Access Memory, RAM). The memory may alternatively include a non-volatile memory (Non-Volatile Memory), for example, a read-only memory (Read-Only Memory, ROM), a flash memory (Flash Memory), a hard disk drive (Hard Disk Drive, HDD), or a solid-state drive (Solid-State Drive, SSD). Alternatively, the memory may include a combination of the foregoing types of memories.

The storage node 520 includes one or more storage controllers 521 and a storage array 522. The storage controller 521 and the storage array 522 may be connected through a bus 523.

The storage controller 521 includes one or more general-purpose processors. The general-purpose processor may be any type of device that can process an electronic instruction, including the CPU, the microprocessor, the microcontroller, the main processor, the controller, the ASIC, and the like. The storage controller 521 may be a dedicated processor only for the storage node 520 or may be shared with the computing node 500 or another storage node 520. It may be understood that, in this embodiment, each storage node includes one storage controller. In another embodiment, a plurality of storage nodes may share one storage controller. This is not specifically limited herein.

A storage array 522 may include a plurality of memories. The memory may be a non-volatile memory, such as a ROM, a flash memory, an HDD, or an SSD. The memory may alternatively include the combination of the foregoing types of memories. For example, the storage array may include a plurality of HDDs or a plurality of SDDs, or the storage array may include an HDD and an SDD. With the assistance of the storage controller 521, the plurality of memories are combined in different manners to form a memory group, thereby providing higher storage performance and a data backup technology than a single memory. Optionally, the storage array 522 may include one or more data centers. The plurality of data centers may be disposed at a same place, or may be disposed separately at different places. This is not specifically limited herein. The storage array 522 may store the program code and the program data.

The server 500 may be any server in a cloud provided by a provider in FIG. 1. The transceiver 512 in the server 500 may be configured to receive association information sent by a terminal device, or may be configured to receive a deployment application sent by the network device, or send configuration information to the network device. The memory 513 or the storage array 522 may be configured to store the received association information, or the like.

In some possible embodiments, the server may be implemented as a virtualized device.

For example, the virtualized device may be a virtual machine (Virtual Machine, VM) on which a program with a packet sending function is run, and the virtual machine is deployed on a hardware device (for example, a physical server). The virtual machine is a complete computer system simulated by software, having a complete hardware system function, and running in a completely isolated environment. The virtual machine may be configured as the server. For example, a virtual server may be implemented based on a general physical server in combination with a network functions virtualization (Network Functions Virtualization, NFV) technology. A person skilled in the art may virtually create, by reading this application, the virtual server, which has the foregoing functions, in combination with the NFV technology on the general physical server. Details are not described herein.

The virtualized device may be a container, and the container is an entity configured to provide an isolated virtualized environment. For example, the container may be a docker container, and the container may be configured as the server. For example, the server may be created by using a corresponding image. For example, container instance may be created, by using an image of a container proxy-container that provides a proxy service, for the proxy-container. The container instance proxy-container is provided as the server. When a container technology is used for implementation, the server may run by using a kernel of a physical machine, and a plurality of servers may share an operating system of the physical machine. Different servers may be isolated by using the container technology. The containerized server may run in the virtualized environment, for example, may run in the virtual machine. Alternatively, the containerized server may directly run in the physical machine.

For example, the virtualized device may be a pod. The pod is a basic unit for Kubernetes (Kubernetes is an open-source container orchestration engine of Google, and is referred to as K8s for short) to deploy, manage, and orchestrate a containerized application. The pod may include one or more containers. All containers in a same pod are usually deployed on a same host. Therefore, all the containers in the same pod may communicate with each other by using the host, and may share a storage resource and a network resource of the host. The pod may be configured as the server. For example, specifically, the pod may be created by container as a service (the container as a service, CaaS, is a container-based PaaS service), and the pod is provided as the server.

Certainly, the server may alternatively be other virtualized devices, which are not listed one by one herein.

In some possible embodiments, the server may alternatively be implemented by the general-purpose processor. For example, a form of the general-purpose processor may be a chip. Specifically, the general-purpose processor implementing the server includes a processing circuit, and an input interface and an output interface that are internally connected to and communicate with the processing circuit. The processing circuit is configured to perform a packet generation step in the foregoing method embodiments through the input interface. The processing circuit is configured to perform a receiving step in the foregoing method embodiments through the input interface. The processing circuit is configured to perform a sending step in the foregoing method embodiments through the output interface. Optionally, the general-purpose processor may alternatively include a storage medium. The processing circuit is configured to perform a storing step in the foregoing method embodiments through the storage medium. The storage medium may store an instruction that is executed by the processing circuit. The processing circuit is configured to execute the instruction stored in the storage medium, to perform the foregoing method embodiments.

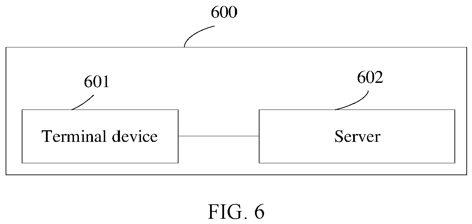

Refer to FIG. 6. An embodiment of this application provides a system 600. The system 600 includes a terminal device 601 and a server 602. Optionally, the terminal device 601 may be an apparatus 300 for deploying a network device, or a terminal device 400, and the server 602 may be a server 500 or a virtual server.

Optionally, the system 600 may alternatively include the network device, and the network device is connected to the server 602. The network device may be any one of a router, a switch, a firewall, or the like.

An embodiment of this application provides a computer program product. When the computer program product runs on a terminal device, the terminal device is enabled to perform the method embodiment in FIG. 2.

A person of ordinary skill in the art may be aware that, with reference to the method steps and the units described in embodiments disclosed in this specification, implementation can be performed by using electronic hardware, computer software, or a combination thereof. To clearly describe the interchangeability between the hardware and the software, the foregoing has generally described steps and composition of each embodiment based on functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, the disclosed system, apparatus, and method may be implemented in other manners. For example, the described apparatus embodiments are merely examples. For example, division into the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be indirect couplings or communication connections through some interfaces, apparatuses, or units, or may be electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments in this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in the storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

All or some of the foregoing embodiments may be implemented by software, hardware, firmware, or any combination thereof. When the software is used to implement the embodiments, all or some of the embodiments may be implemented in a form of a computer program product. The computer program product includes one or more computer program instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer program instructions may be transmitted from a website, computer, server, or data center to another website, computer, server, or data center in a wired or wireless manner. The computer-readable storage medium may be any usable medium accessible by the computer, or may be a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive), or the like.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A method for deploying a network device, comprising:
obtaining, by a terminal device, a server identifier and an enterprise identifier, wherein the server identifier indicates a server that manages the network device, the enterprise identifier indicates an enterprise to which the network device belongs, and the server does not belong to the enterprise;
obtaining an identifier of the network device;
associating the identifier of the network device with the enterprise identifier to generate association information; and
sending the association information to the server indicated by the server identifier.

2. The method according to claim 1, wherein the obtaining a server identifier and an enterprise identifier comprises:
obtaining encrypted information; and
decrypting the encrypted information to obtain the server identifier and the enterprise identifier.

3. The method according to claim 2, wherein a form of the encrypted information comprises a quick-response code; and
correspondingly, the decrypting the encrypted information to obtain the server identifier and the enterprise identifier comprises:
scanning and parsing the quick-response code to obtain the server identifier and the enterprise identifier.

4. The method according to claim 3, wherein the scanning and parsing the quick-response code to obtain the server identifier and the enterprise identifier comprises:
scanning and parsing the quick-response code to obtain a first uniform resource locator URL link; and
obtaining the server identifier and the enterprise identifier based on the first URL link.

5. The method according to claim 3, wherein the scanning and parsing the quick-response code to obtain the server identifier and the enterprise identifier comprises:
scanning and parsing the quick-response code to obtain a second uniform resource locator URL link, wherein the second URL link comprises the server identifier and the enterprise identifier.

6. The method according to claim 2, wherein a form of the encrypted information comprises a third uniform resource locator URL link, wherein the third URL link indicates to obtain the server identifier and the enterprise identifier; and
correspondingly, the decrypting the encrypted information to obtain the server identifier and the enterprise identifier comprises:
obtaining the server identifier and the enterprise identifier based on the third URL link.

7. The method according to claim 2, wherein a form of the encrypted information comprises a fourth uniform resource locator URL link, and the fourth URL link comprises the server identifier and the enterprise identifier.

8. The method according to any one of claims 2 to 7, wherein the encrypted information further comprises account permission information; and the account permission information indicates permission possessed by the terminal device, comprising permission to associate the identifier of the network device with the enterprise identifier to generate the association information, and/or permission to send the association information to the server indicated by the server identifier.

9. The method according to claim 1, wherein the obtaining a server identifier and an enterprise identifier comprises:
obtaining speech information; and
recognizing the speech information to obtain the server identifier and the enterprise identifier.

10. An apparatus for deploying a network device, comprising:
an obtaining unit, configured to obtain a server identifier and an enterprise identifier, wherein the server identifier indicates a server that manages the network device, and the enterprise identifier indicates an enterprise to which the network device belongs, wherein
the obtaining unit is further configured to obtain an identifier of the network device;
an association unit, configured to associate the identifier of the network device with the enterprise identifier to generate association information; and
a communication unit, configured to send the association information to the server indicated by the server identifier.

11. The apparatus according to claim 10, wherein the obtaining unit is configured to:
obtain encrypted information; and
decrypt the encrypted information to obtain the server identifier and the enterprise identifier.

12. The apparatus according to claim 11, wherein a form of the encrypted information comprises a quick-response code; and
the obtaining unit is configured to scan and parse the quick-response code to obtain the server identifier and the enterprise identifier.

13. The apparatus according to claim 12, wherein the obtaining unit is configured to:
scan and parse the quick-response code to obtain a first uniform resource locator URL link; and
obtain the server identifier and the enterprise identifier based on the first URL link.

14. The apparatus according to claim 12, wherein the obtaining unit is configured to:
scan and parse the quick-response code to obtain a second uniform resource locator URL link, wherein the second URL link comprises the server identifier and the enterprise identifier.

15. The apparatus according to claim 11, wherein a form of the encrypted information comprises a third uniform resource locator URL link, and the third URL link indicates to obtain the server identifier and the enterprise identifier; and
the obtaining unit is configured to obtain the server identifier and the enterprise identifier based on the third URL link.

16. The apparatus according to claim 11, wherein a form of the encrypted information comprises a fourth uniform resource locator URL link, and the fourth URL link comprises the server identifier and the enterprise identifier.

17. The apparatus according to any one of claims 11 to 16, wherein the encrypted information further comprises account permission information; and the account permission information indicates permission possessed by the terminal device, comprising permission to associate the identifier of the network device with the enterprise identifier to generate the association information, and/or permission to send the association information to the server indicated by the server identifier.

18. The apparatus according to claim 10, wherein the obtaining unit is configured to:
obtain speech information; and
recognize the speech information to obtain the server identifier and the enterprise identifier.

19. A terminal device, comprising a memory and a processor, wherein the memory is configured to store instructions, and the processor is configured to invoke the instructions stored in the memory to perform the method according to any one of claims 1 to 9.

20. A computer storage medium, comprising program instructions, wherein when the program instructions are run on a computer, the computer is enabled to perform the method according to any one of claims 1 to 9.

21. A system, comprising a terminal device and a server, wherein the terminal device is configured to perform the method according to any one of claims 1 to 9.
